# EUROPEAN PATENT SPECIFICATION

(11) **EP 3 708 387 B1**
(45) Date of publication and mention of the grant of the patent: **21.07.2021**
(21) Application number: 20159252.4
(22) Date of filing: 25.02.2020
(51) Int. Cl.: B60C 11/03

(54) **TIRE FOR RUNNING ON ROUGH TERRAIN**
REIFEN ZUM FAHREN AUF UNEBENEM GELÄNDE
PNEU POUR TERRAIN ACCIDENTÉ

(30) Priority: 13.03.2019 JP 2019046228
(43) Date of publication of application: 16.09.2020
(73) Proprietor: Sumitomo Rubber Industries Ltd., Kobe-shi, Hyogo 651-0072 (JP)
(72) Inventor: MAEDA, Yoshiyuki, Kobe-shi, Hyogo 651-0072 (JP)
(74) Representative: Manitz Finsterwald Patent- und Rechtsanwaltspartnerschaft mbB

(56) References cited:
- EP-A1- 3 059 101
- JP-A- H11 321 234
- US-A1- 2015 007 917

## Description

### BACKGROUND OF THE INVENTION

### Field of the Invention

The present invention relates to a tire, for running on rough terrain, used suitably in a time trial competition on a dirt road (so called "dirt trial" in Japan), etc.

### Description of the Background Art

Japanese Patent No. 5981959 discloses a pneumatic tire for running on rough terrain. The tread portion of the pneumatic tire has a plurality of inclined grooves that are inclined to one side relative to the tire axial direction, and a plurality of connection grooves that each connect between the inclined grooves adjacent to each other in the tire circumferential direction and that are aligned in the tire axial direction. Accordingly, a plurality of blocks are arranged between the inclined grooves of the pneumatic tire along the inclined grooves.

The pneumatic tire of Japanese Patent No. 5981959 can exhibit sufficient traction and lateral grip on a rough terrain road surface (hereinafter, sometimes referred to as "dirt road") in a dirt trial or the like. Meanwhile, with the pneumatic tire, a change in traction and lateral grip during running is relatively great, so that there is room for improvement in vehicle controllability.

In particular, the above change in traction and lateral grip significantly appears on a hard dirt road from which gravel on the road surface is removed as a dirt trial competition progresses, which tends to make it difficult to control the vehicle.

A heavy-duty tire having the features of the preamble of claim 1 is known from EP 3 059 101 A1.

### SUMMARY OF THE INVENTION

The present invention has been made in view of the above-described problem, and a main object of the present invention is to provide a tire, for running on rough terrain, that exhibits sufficient traction and lateral grip, and also has excellent controllability, on a hard dirt road.

The present invention is directed to a tire for running on rough terrain, the tire including a tread portion, wherein: the tread portion includes at least three main grooves continuously extending in a zigzag manner in a tire circumferential direction, and at least two land portions demarcated by the main grooves; the main grooves are provided such that zigzag phases thereof coincide with each other; the land portions include a first land portion and a second land portion adjacent to each other via one of the main grooves; the first land portion is divided into a plurality of first blocks by a plurality of first inclined grooves that are inclined in a first direction relative to a tire axial direction; the second land portion is divided into a plurality of second blocks by a plurality of second inclined grooves that are inclined in a second direction, which is opposite to the first direction, relative to the tire axial direction; and the respective first blocks are disposed so as to overlap the respective second blocks in the tire circumferential direction, such that each first block has an overlap length in the tire circumferential direction with the corresponding second block.

In another aspect of the present invention, each of the main grooves may include a first inclined element that is inclined in the first direction, a second inclined element that is inclined in the second direction, and the plurality of first inclined grooves may provide communication between the second inclined elements of the main grooves adjacent to each other in the tire axial direction, and the plurality of second inclined grooves may provide communication between the first inclined elements of the main grooves adjacent to each other in the tire axial direction.

In another aspect of the present invention, the first inclined grooves may extend parallel to the first inclined element.

In another aspect of the present invention, the second inclined grooves may extend parallel to the second inclined element.

In another aspect of the present invention, the first inclined grooves may be inclined at an angle of 30 to 60 degrees relative to the tire axial direction.

In another aspect of the present invention, the second inclined grooves may be inclined at an angle of 30 to 60 degrees relative to the tire axial direction.

In another aspect of the present invention, an angle of each first inclined groove relative to the tire axial direction may be equal to an angle of each second inclined groove relative to the tire axial direction.

In another aspect of the present invention, the first land portion may have only the first inclined grooves as grooves that completely traverse the first land portion.

In another aspect of the present invention, the second land portion may have only the second inclined grooves as grooves that completely traverse the second land portion.

In another aspect of the present invention, an area of a tread surface of each first block may be 95 to 105% of an area of a tread surface of each second block.

In another aspect of the present invention, a contour shape of a tread surface of each first block may be in line symmetry with a contour shape of a tread surface of each second block with respect to a line along the tire circumferential direction.

In the inventive tire, each first block includes a main body that is inclined in the first direction relative to the tire axial direction, and a pair of end portions that are inclined in the second direction relative to the tire axial direction.

In another aspect of the present invention, each second block may include a main body that is inclined in the second direction relative to the tire axial direction, and a pair of end portions that are inclined in the first direction relative to the tire axial direction.

In another aspect of the present invention, each of the main grooves may include a circumferential portion that is located between the first inclined element and the second inclined element and that extends along the tire circumferential direction.

In another aspect of the present invention, the circumferential portion may have a length in the tire circumferential direction equal to or less than 20% of one cycle of zigzag of the main groove.

In another aspect of the present invention, a groove width of the circumferential portion may be larger than a groove width of the first inclined element and a groove width of the second inclined element.

In another aspect of the present invention, a groove width of each main groove may be 4.5 to 8.5 mm.

In another aspect of the present invention, each of groove widths of the first inclined grooves and the second inclined grooves may be 4.5 to 8.5 mm.

In another aspect of the present invention, in the tread portion, the number of the main grooves may be five or more, and the first land portion and the second land portion may be formed in four or more lines so as to be alternately aligned in the tire axial direction.

In another aspect of the present invention, a land ratio may be 60 to 75%.

In the tire for running on rough terrain according to the present invention, the tread portion has at least three main grooves continuously extending in a zigzag manner in the tire circumferential direction. The main grooves are provided such that zigzag phases thereof coincide with each other. The three or more main grooves, the zigzag phases of which coincide with each other, generate frictional force in the tire circumferential direction and the tire axial direction in a well-balanced manner, and further can exhibit excellent traction and lateral grip, on a hard dirt road.

In the tread portion, the first land portion is divided into a plurality of first blocks by a plurality of first inclined grooves that are inclined in the first direction relative to the tire axial direction, and the second land portion is divided into a plurality of second blocks by a plurality of second inclined grooves that are inclined in the second direction, which is opposite to the first direction, relative to the tire axial direction. Therefore, the first land portion and the second land portion provide edge components in various directions, and improve not only traction and but also lateral grip.

Moreover, the first inclined grooves and the second inclined grooves are inclined in the directions opposite to each other, and the respective first blocks are disposed so as to overlap the respective second blocks in the tire circumferential direction. Accordingly, formation of a locally low stiffness portion where the first inclined groove and the second inclined groove are continuous in a straight line via the main groove, is inhibited, and further a great change in traction and lateral grip force during running is inhibited.

Therefore, on a hard dirt road, the tire for running on rough terrain according to the present invention exhibits sufficient traction and lateral grip, and also minimizes a change thereof during running, thereby having excellent controllability.

### BRIEF DESCRIPTION OF THE DRAWINGS

FIG. 1 is a development of a tread portion showing an embodiment of the present invention;
FIG. 2 is an enlarged view of a main part in FIG. 1;
FIG. 3 is an enlarged view of a first block and a second block in FIG. 2;
FIG. 4 is a development of a tread portion showing another embodiment of the present invention; and
FIG. 5 is a development of a tread portion of a comparative example.

### DESCRIPTION OF THE PREFERRED EMBODIMENTS

Hereinafter, an embodiment of the present invention will be described on the basis of the drawings. The drawings are used for the purpose of illustration and explanation of the present invention, and the present invention is not to be construed as being limited to the specific embodiment shown in the drawings, and the like.

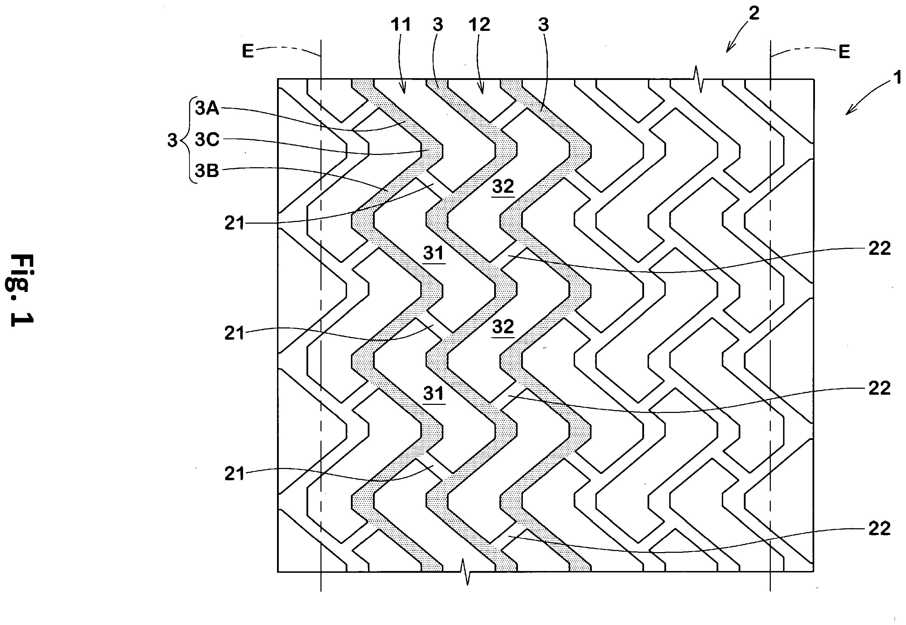

FIG. 1 shows a development of a tread portion 2 of a tire 1 for running on rough terrain according to the present embodiment. The tire 1 of the present embodiment is used for running at a high speed on rough terrain as in a dirt trial, a rally, or the like. FIG. 1 does not show the internal structure, etc., of the tire 1, but, for example, a radial structure having high tread stiffness may be used for the tire 1 of the present embodiment.

As shown in FIG. 1, the tread portion 2 includes at least three main grooves 3 continuously extending in a zigzag manner in the tire circumferential direction, and at least two land portions demarcated by these main grooves 3. In FIG. 1, the three main grooves 3 are lightly colored to facilitate understanding.

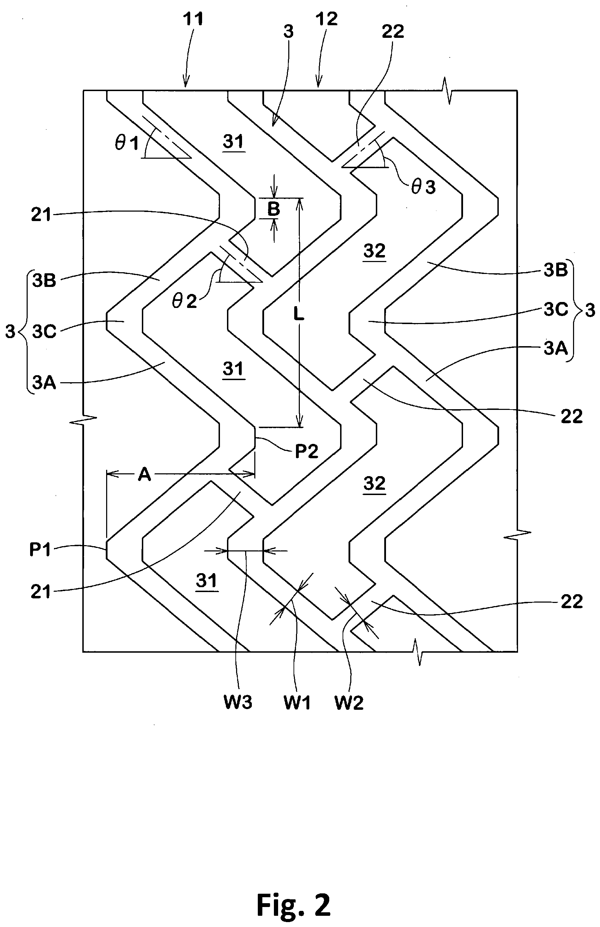

FIG. 2 shows an enlarged view of a main part in FIG. 1. As shown in FIG. 2, each main groove 3 includes a first inclined element 3A that is inclined in a first direction, and a second inclined element 3B that is inclined in a second direction. In FIGS. 1 and 2, the first direction is downward toward the right side, and the second direction is upward toward the right side.

Each main groove 3 has a zigzag shape having a total amplitude A in the tire axial direction and a cycle L in the tire circumferential direction. The total amplitude A is the distance in the tire axial direction from a first peak P1 to a second peak P2 of the main groove 3. In the present embodiment, the zigzag waveforms of the respective main grooves 3 are the same.

The main grooves 3 are provided such that zigzag phases thereof coincide with each other. That is, the first peaks P1 and the second peaks P2 of the respective main grooves 3 appear at the same positions in the tire circumferential direction. The three or more main grooves 3, the zigzag phases of which coincide with each other, generate frictional force in the tire circumferential direction and the tire axial direction in a well-balanced manner, and further can exhibit excellent traction and lateral grip, on a hard dirt road.

To further enhance the above effect, the first inclined elements 3A and the second inclined elements 3B are preferably inclined at an angle θ1 of, for example, 30 to 60 degrees, preferably 35 to 55 degrees, and more preferably 40 to 50 degrees relative to the tire axial direction. In addition, the groove width W1 of each main groove 3 is, for example, preferably in the range of 4.5 to 8.5 mm. The groove width is measured in a direction orthogonal to the longitudinal direction of a measurement portion.

The land portions include a first land portion 11 and a second land portion 12 adjacent to each other via one main groove 3.

The first land portion 11 is divided into a plurality of first blocks 31 by a plurality of first inclined grooves 21 that are inclined in the first direction relative to the tire axial direction. The second land portion 12 is divided into a plurality of second blocks 32 by a plurality of second inclined grooves 22 that are inclined in the second direction, which is opposite to the first direction, relative to the tire axial direction. Such a first land portion 11 and such a second land portion 12 provide edge components in various directions and can improve not only traction but also lateral grip.

In a preferable mode, each of the groove widths W2 of the first inclined grooves 21 and the second inclined grooves 22 is preferably in the range of 4.5 to 8.5 mm.

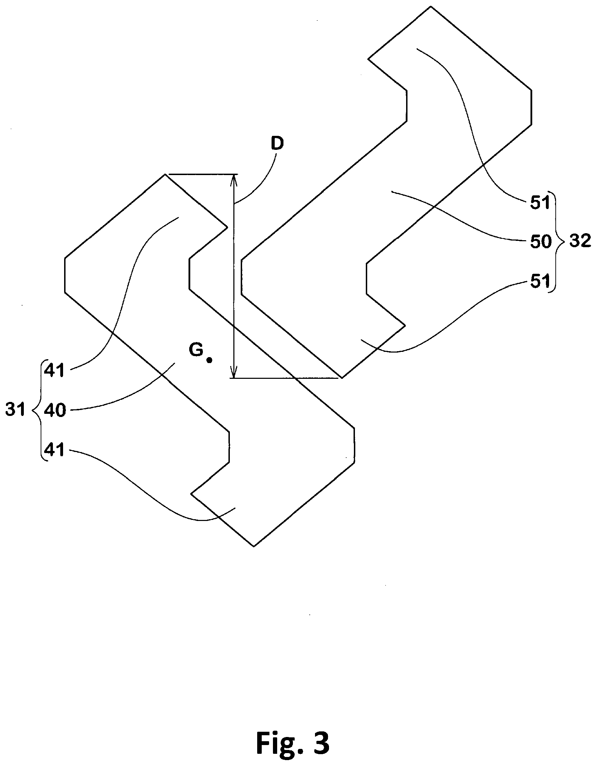

The respective first blocks 31 are disposed so as to overlap the respective second blocks 32 in the tire circumferential direction. That is, as shown in FIG. 3, each first block 31 has an overlap length D in the tire circumferential direction with the corresponding second block 32.

As a result of various experiments, it is found that, to minimize a change in grip, etc., during running on a hard dirt road, it is important that a portion where the stiffness is locally low (for example, a lateral groove, etc.) is not extended by a long distance in the tire axial direction in the tread portion 2. In the present embodiment, in addition to the directions of inclination of the first inclined grooves 21 and the second inclined grooves 22, the respective first blocks 31 are disposed so as to overlap the respective second blocks 32 in the tire circumferential direction. Accordingly, as is obvious from FIG. 2, a locally low stiffness portion where the first inclined groove 21 and the second inclined groove 22 are continuous in a straight line via the main groove 3, is not formed, and, further, a great change in traction and lateral grip force during running is inhibited.

In a preferable mode, as shown in FIG. 2, each first inclined groove 21 may provide communication between the second inclined elements 3B of the main grooves 3, 3 adjacent to each other in the tire axial direction. Accordingly, edges having different directions can be provided to the first land portion 11 in a well-balanced manner. In the present embodiment, a mode is shown in which each first inclined groove 21 communicates with the second inclined elements 3B such that the first peak P1 and the second peak P2 of the main groove 3 are not included (that is, a part of the first inclined groove 21 does not communicate directly with the first peak P1 and the second peak P2).

In a preferable mode, each first inclined groove 21 may be inclined at an angle θ2 of 30 to 60 degrees, preferably 35 to 55 degrees, and more preferably 40 to 50 degrees relative to the tire axial direction. Particularly preferably, each first inclined groove 21 may extend parallel to the first inclined element 3A of the main groove 3. In these modes, edges having different directions can be provided to the first land portion 11 in a further well-balanced manner, so that excellent traction and lateral grip can be exhibited on a hard dirt road.

In a preferable mode, each second inclined groove 22 may provide communication between the first inclined elements 3A of the main grooves 3, 3 adjacent to each other in the tire axial direction. Accordingly, edges having different directions can be provided to the second land portion 12 in a well-balanced manner. In the present embodiment, a mode is shown in which each second inclined groove 22 communicates with the first inclined element 3A such that the first peak P1 and the second peak P2 of the main groove 3 are not included (that is, a part of the second inclined groove 22 does not communicate directly with the first peak P1 and the second peak P2).

In a preferable mode, each second inclined groove 22 may be inclined at an angle θ3 of 30 to 60 degrees, preferably 35 to 55 degrees, and more preferably 40 to 50 degrees relative to the tire axial direction. Particularly preferably, each second inclined groove 22 may extend parallel to the second inclined element 3B of the main groove 3. In these modes, edges having different directions can be provided to the second land portion 12 in a further well-balanced manner, so that excellent traction and lateral grip can be exhibited on a hard dirt road.

In a preferable mode, the angle θ2 of each first inclined groove 21 relative to the tire axial direction may be equal to the angle θ3 of each second inclined groove 22 relative to the tire axial direction (although the directions thereof are opposite to each other). In these modes, edges having different directions can be provided to the first land portion 11 and the second land portion 12 in a further well-balanced manner, so that further excellent traction and lateral grip can be exhibited on a hard dirt road.

In a preferable mode, the first land portion 11 has only the first inclined grooves 21 as grooves that completely traverse the first land portion 11. Accordingly, each first block 31 is formed as a zigzag block continuously extending between the first inclined grooves 21, 21 adjacent to each other in the tire circumferential direction.

As shown in FIG. 3, specifically, each first block 31 includes a main body 40 that is inclined in the first direction (downward toward the right side) relative to the tire axial direction, and a pair of end portions 41, 41 that are connected to both ends of the main body 40 and that are inclined in the second direction relative to the tire axial direction. The main body 40 is formed so as to be longer than the end portions 41 and has sufficiently high stiffness in the tire circumferential direction. The main body 40 serves to exhibit high traction. In addition, each first block 31 has high torsional stiffness since the end portions 41 are connected to both sides of the main body 40. The first block 31 inhibits block deformation during cornering and provides excellent cornering performance, and can also effectively inhibit uneven wear that is likely to occur at both block ends.

As shown in FIG. 2, as a preferable mode, the second land portion 12 has only the second inclined grooves 22 as grooves that completely traverse the second land portion 12. Accordingly, each second block 32 is formed as a zigzag block continuously extending between the second inclined grooves 22, 22 adjacent to each other in the tire circumferential direction.

As shown in FIG. 3, specifically, the contour shape of each second block 32 has a line-symmetrical shape obtained by inversing the contour shape of each first block 31 with respect to a line along the tire circumferential direction. That is, each second block 32 includes a main body 50 that is inclined in the second direction (upward toward the right side) relative to the tire axial direction, and a pair of end portions 51, 51, that are connected to both ends of the main body 50 and that are inclined in the first direction relative to the tire axial direction. Therefore, similar to the first blocks 31, the second blocks 32 in this mode can also exhibit high traction, excellent cornering performance, and excellent uneven wear resistance.

In a preferable mode, each first block 31 is formed such that the first block 31 overlaps the original shape when being rotated by 180 degrees about the area center of gravity G of a tread surface (twice symmetric). Accordingly, the above effect is exhibited regardless of the rotational direction of the tire 1.

In a preferable mode, the area of the tread surface of each first block 31 is set to be 95 to 105% of (that is, substantially equal to) the area of the tread surface of each second block 32. Accordingly, in the first land portion 11 and the second land portion 12, the block stiffness of the tread portion 2 becomes uniform, and, further, a change in traction and lateral grip during running can be minimized.

As shown in FIG. 2, in a preferable mode, each of the groove widths W2 of the first inclined grooves 21 and the second inclined grooves 22 may be equal to the groove width W1 of the main groove 3. Accordingly, in the first land portion 11 and the second land portion 12, the block stiffness of the tread portion 2 becomes uniform, and, further, a change in traction and lateral grip during running can be minimized.

In a preferable mode, each main groove 3 may include, between the first inclined element 3A and the second inclined element 3B, a circumferential portion 3C extending along the tire circumferential direction. Such a circumferential portion 3C serves to enhance lateral grip, particularly, on a hard dirt road. Meanwhile, when the length of the circumferential portion 3C becomes large, traction, particularly, during straight running, may relatively decrease. Therefore, in order to maintain traction and lateral grip of the tire 1 in a well-balanced manner, the length B in the tire circumferential direction of the circumferential portion 3C (this is the maximum length measured at the edges of the groove) is set to be not greater than 20% and more preferably not greater than 18%, of one cycle L of zigzag of the main groove 3.

In a preferable mode, the groove width W3 of the circumferential portion 3C is preferably larger than the groove widths of the first inclined element 3A and the second inclined element 3B. Gravel and the like in the first inclined element 3A and the second inclined element 3B tend to be collected at the first peak P1 and the second peak P2 of the main groove 3. However, when the circumferential portion 3C is formed with a relatively large groove width, dischargeability of dirt and the like on a dirt road is improved. From such a viewpoint, the groove width W3 of the circumferential portion 3C is set to be not less than 1.3 times and more preferably not less than 1.5 times the groove width of the first inclined element 3A (this is the same as the groove width of the second inclined element).

As shown in FIG. 1, in a preferable mode, in the tread portion 2, the number of the main grooves 3 is five or more, and the first land portion 11 and the second land portion 12 are formed in four or more lines so as to be alternately aligned in the tire axial direction. In the mode of FIG. 1, in the tread portion 2, seven main grooves 3 are provided, and the first land portion 11 and the second land portion 12 are formed in six lines so as to be alternately aligned in the tire axial direction. A portion of the tread portion 2 between ground-contact edges E, E is essentially formed by the first land portions 11 and the second land portions 12. In such a mode, during straight running, great traction can be exhibited, and a change thereof can be minimized.

In a preferable mode, a land ratio may be 60 to 75%. Accordingly, further excellent traction and lateral grip can be exhibited on a hard dirt road. In the present specification, the land ratio is defined as the ratio of the total area of the actual tread surface to the total area of a tread surface calculated in a state where all grooves are filled (that is, a slick state) between the tread ground-contact edges E, E.

In the present specification, each tread ground-contact edge E is defined as a position at the outermost side in the tire axial direction of a tread ground-contact surface in a normal load applied state.

In the present specification, the "normal load applied state" refers to a state where the tire 1 is mounted to a normal rim at a normal internal pressure, a normal load is applied to the tire 1, and the tire 1 is brought into contact with a flat surface at a camber angle of 0 degrees.

In the present specification, the "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

In the present specification, the "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

In the present specification, the "normal load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

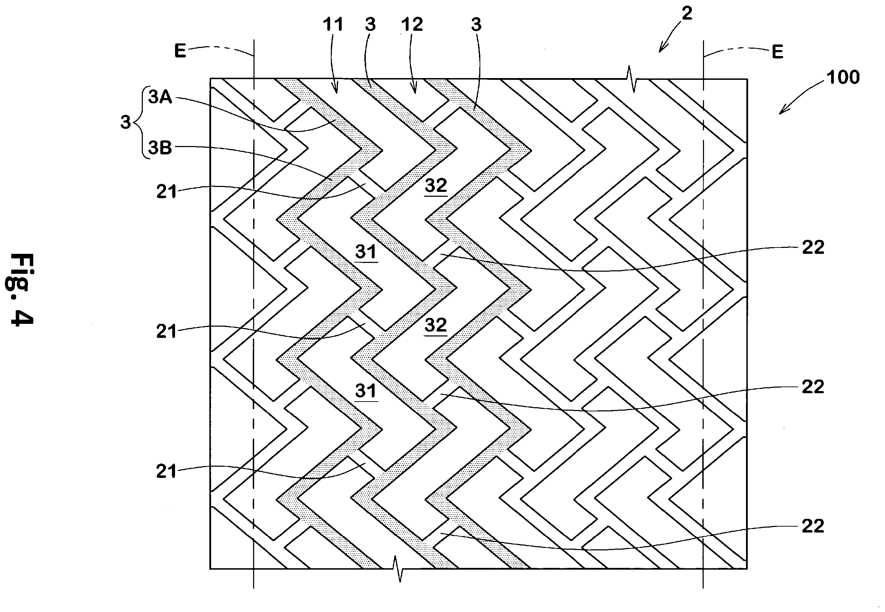

FIG. 4 shows another embodiment of the present invention. In a tire 100 in FIG. 4, each main groove 3 includes a first inclined element 3A and a second inclined element 3B, and does not have any circumferential portion 3C shown in FIG. 1. The tire 100 of this embodiment has less edges along the tire circumferential direction as compared to the embodiment in FIG. 1, and thus lateral grip relatively decreases, but traction can be enhanced.

Although the embodiments of the present invention have been described as above, the present invention may be subjected to numerous alterations and modifications, and the above-mentioned embodiments have been described merely as examples. Therefore, it should be noted that the present invention is not limited to the specific embodiments described in the present specification, but alterations, equivalents, and modifications are all encompassed in the present invention unless deviating from the gist of the present invention as set forth in the claims.

### EXAMPLES

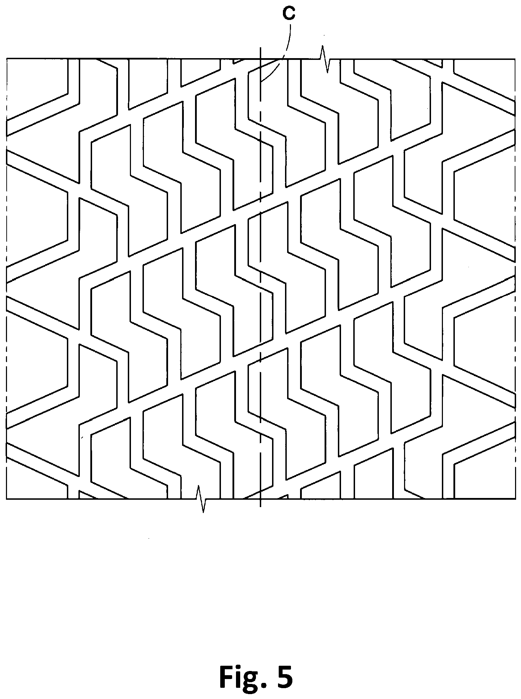

Tires (example products) with a size of 205/65R15 having the basic pattern in FIG. 1 and a tire with the same size having the pattern in Japanese Patent No. 5981959 (a pattern in FIG. 5: a comparative example) were evaluated for traction performance, vehicle controllability, lateral grip, and running time. In FIG. 5, reference character C indicates a tire equator. In addition, time attack was performed on a dirt road, and the best times were compared. Both types of tires had the same internal structure and rubber composition and each had a land ratio adjusted to 68%, and thus were tested in relation to the difference therebetween only in pattern. The test method was as follows.

A test driver drove a four-wheel-drive vehicle having the test tires mounted thereto on a dirt road and made sensory evaluation for vehicle controllability, lateral grip, traction performance, and running time. The results are indicated on 5-point-scale with 5 being the maximum score and 1 being the minimum score.

The results of the test are shown in Table 1.

[Table 1]

| | Comparative example | Example 1 | Example 2 | Example 3 |
|---|---|---|---|---|
| Angle of first inclined groove | - | 40 | 45 | 50 |
| Angle of second inclined groove | - | -40 | -45 | -50 |
| Controllability | 3 | 4 | 4 | 5 |
| Lateral grip | 3 | 3 | 4 | 4 |
| Traction | 3 | 5 | 4 | 3 |
| Running time (index) | 100 | 102 | 101 | 103 |

As a result of the test, it was confirmed that, in the tires of the examples, the respective performance characteristics significantly improved as compared to those in the comparative example.

## Claims

1. A tire (1, 100) for running on rough terrain, the tire (1, 100) comprising a tread portion (2), wherein
the tread portion (2) includes at least three main grooves (3) continuously extending in a zigzag manner in a tire circumferential direction, and at least two land portions demarcated by the main grooves (3),
the main grooves (3) are provided such that zigzag phases thereof coincide with each other,
the land portions include a first land portion (11) and a second land portion (12) adjacent to each other via one of the main grooves (3),
the first land portion (11) is divided into a plurality of first blocks (31) by a plurality of first inclined grooves (21) that are inclined in a first direction relative to a tire axial direction,
the second land portion (12) is divided into a plurality of second blocks (32) by a plurality of second inclined grooves (22) that are inclined in a second direction, which is opposite to the first direction, relative to the tire axial direction, and
the respective first blocks (31) are disposed so as to overlap the respective second blocks (32) in the tire circumferential direction, such that each first block (31) has an overlap length (D) in the tire circumferential direction with the corresponding second block (32),
**characterized in that**
each first block (31) includes a main body (40) that is inclined in the first direction relative to the tire axial direction, and a pair of end portions (41) that are inclined in the second direction relative to the tire axial direction.

2. The tire (1, 100) for running on rough terrain according to claim 1, wherein each of the main grooves (3) includes a first inclined element (3A) that is inclined in the first direction, and a second inclined element (3B) that is inclined in the second direction, and
the plurality of first inclined grooves (21) provide communication between the second inclined elements (3B) of the main grooves (3) adjacent to each other in the tire axial direction, and the plurality of second inclined grooves (22) provide communication between the first inclined elements (3A) of the main grooves (3) adjacent to each other in the tire axial direction.

3. The tire (1, 100) for running on rough terrain according to claim 2, wherein the first inclined grooves (21) extend parallel to the first inclined element (3A).

4. The tire (1, 100) for running on rough terrain according to claim 2 or 3, wherein the second inclined grooves (22) extend parallel to the second inclined element (3B).

5. The tire (1, 100) for running on rough terrain according to any one of claims 2 to 4, wherein the first inclined grooves (21) are inclined at an angle of 30 to 60 degrees relative to the tire axial direction.

6. The tire (1, 100) for running on rough terrain according to any one of claims 2 to 5, wherein the second inclined grooves (22) are inclined at an angle of 30 to 60 degrees relative to the tire axial direction.

7. The tire (1, 100) for running on rough terrain according to any one of claims 1 to 6, wherein an angle of each first inclined groove (21) relative to the tire axial direction is equal to an angle of each second inclined groove (22) relative to the tire axial direction.

8. The tire (1, 100) for running on rough terrain according to any one of claims 1 to 7, wherein the first land portion (11) has only the first inclined grooves (21) as grooves that completely traverse the first land portion (11).

9. The tire (1, 100) for running on rough terrain according to any one of claims 1 to 8, wherein the second land portion (12) has only the second inclined grooves (22) as grooves that completely traverse the second land portion (12).

10. The tire (1, 100) for running on rough terrain according to any one of claims 1 to 9, wherein an area of a tread surface of each first block (31) is 95 to 105% of an area of a tread surface of each second block (32).

11. The tire (1, 100) for running on rough terrain according to any one of claims 1 to 10, wherein each second block (32) includes a main body (50) that is inclined in the second direction relative to the tire axial direction, and a pair of end portions (51) that are inclined in the first direction relative to the tire axial direction.

12. The tire (1) for running on rough terrain according to any one of claims 2 to 6, wherein each of the main grooves (3) includes a circumferential portion (3C) that is located between the first inclined element (3A) and the second inclined element (3B) and that extends along the tire circumferential direction.

13. The tire (1) for running on rough terrain according to claim 12, wherein the circumferential portion (3C) has a length in the tire circumferential direction equal to or less than 20% of one cycle of zigzag of the main groove (3).

14. The tire (1) for running on rough terrain according to claim 12 or 13, wherein a groove width (W3) of the circumferential portion (3C) is larger than a groove width of the first inclined element (3A) and a groove width of the second inclined element (3B).

## Patentansprüche

1. Reifen (1, 100) zur Fahrt auf unwegsamem Gelände, wobei der Reifen (1, 100) einen Laufflächenabschnitt (2) umfasst, wobei
der Laufflächenabschnitt (2) mindestens drei Hauptrillen (3), die sich kontinuierlich zickzackförmig in einer Reifenumfangsrichtung erstrecken, und mindestens zwei durch die Hauptrillen (3) abgegrenzte Landabschnitte umfasst,
die Hauptrillen (3) so vorgesehen sind, dass deren Zickzack-Phasen miteinander übereinstimmen,
die Landabschnitte einen ersten Landabschnitt (11) und einen zweiten Landabschnitt (12) umfassen, die über eine der Hauptrillen (3) einander benachbart sind,
der erste Landabschnitt (11) in eine Vielzahl von ersten Blöcken (31) durch eine Vielzahl von ersten geneigten Rillen (21) unterteilt ist, die in einer ersten Richtung relativ zu einer axialen Richtung des Reifens geneigt sind,
der zweite Landabschnitt (12) in eine Vielzahl von zweiten Blöcken (32) durch eine Vielzahl von zweiten geneigten Rillen (22) unterteilt ist, die in einer zweiten Richtung, die der ersten Richtung entgegengesetzt ist, relativ zur axialen Richtung des Reifens geneigt sind, und
die jeweiligen ersten Blöcke (31) so angeordnet sind, dass sie die jeweiligen zweiten Blöcke (32) in der Reifenumfangsrichtung überlappen, so dass jeder erste Block (31) eine Überlappungslänge (D) in der Reifenumfangsrichtung mit dem entsprechenden zweiten Block (32) aufweist,
**dadurch gekennzeichnet, dass**
jeder erste Block (31) einen Hauptkörper (40), der in der ersten Richtung relativ zu der axialen Richtung des Reifens geneigt ist, und ein Paar Endabschnitte (41), die in der zweiten Richtung relativ zu der axialen Richtung des Reifens geneigt sind, umfasst.

2. Reifen (1, 100) zur Fahrt auf unwegsamem Gelände nach Anspruch 1, wobei
jede der Hauptrillen (3) ein erstes geneigtes Element (3A), das in der ersten Richtung geneigt ist, und ein zweites geneigtes Element (3B), das in der zweiten Richtung geneigt ist, umfasst, und
die Vielzahl von ersten geneigten Rillen (21) eine Verbindung zwischen den zweiten geneigten Elementen (3B) der Hauptrillen (3), die einander in der axialen Richtung des Reifens benachbart sind, bereitstellen, und die Vielzahl von zweiten geneigten Rillen (22) eine Verbindung zwischen den ersten geneigten Elementen (3A) der Hauptrillen (3), die einander in der axialen Richtung des Reifens benachbart sind, bereitstellen.

3. Reifen (1, 100) zur Fahrt auf unwegsamem Gelände nach Anspruch 2, wobei sich die ersten geneigten Rillen (21) parallel zu dem ersten geneigten Element (3A) erstrecken.

4. Reifen (1, 100) zur Fahrt auf unwegsamem Gelände nach Anspruch 2 oder 3, wobei sich die zweiten geneigten Rillen (22) parallel zu dem zweiten geneigten Element (3B) erstrecken.

5. Reifen (1, 100) zur Fahrt auf unwegsamem Gelände nach einem der Ansprüche 2 bis 4, wobei die ersten geneigten Rillen (21) in einem Winkel von 30 bis 60 Grad relativ zur axialen Richtung des Reifens geneigt sind.

6. Reifen (1, 100) zur Fahrt auf unwegsamem Gelände nach einem der Ansprüche 2 bis 5, wobei die zweiten geneigten Rillen (22) in einem Winkel von 30 bis 60 Grad relativ zur axialen Richtung des Reifens geneigt sind.

7. Reifen (1, 100) zur Fahrt auf unwegsamem Gelände nach einem der Ansprüche 1 bis 6, wobei ein Winkel jeder ersten geneigten Rille (21) relativ zu der axialen Richtung des Reifens gleich einem Winkel jeder zweiten geneigten Rille (22) relativ zu der axialen Richtung des Reifens ist.

8. Reifen (1, 100) zur Fahrt auf unwegsamem Gelände nach einem der Ansprüche 1 bis 7, wobei der erste Landabschnitt (11) nur die ersten geneigten Rillen (21) als Rillen aufweist, die den ersten Landabschnitt (11) vollständig durchqueren.

9. Reifen (1, 100) zur Fahrt auf unwegsamem Gelände nach einem der Ansprüche 1 bis 8, wobei der zweite Landabschnitt (12) nur die zweiten geneigten Rillen (22) als Rillen aufweist, die den zweiten Landabschnitt (12) vollständig durchqueren.

10. Reifen (1, 100) zur Fahrt auf unwegsamem Gelände nach einem der Ansprüche 1 bis 9, wobei eine Fläche einer Laufflächenoberfläche jedes ersten Blocks (31) 95 bis 105 % einer Fläche einer Laufflächenoberfläche jedes zweiten Blocks (32) beträgt.

11. Reifen (1, 100) zur Fahrt auf unwegsamem Gelände nach einem der Ansprüche 1 bis 10, wobei jeder zweite Block (32) einen Hauptkörper (50), der in der zweiten Richtung relativ zu der axialen Richtung des Reifens geneigt ist, und ein Paar Endabschnitte (51), die in der ersten Richtung relativ zu der axialen Richtung des Reifens geneigt sind, umfasst.

12. Reifen (1) zur Fahrt auf unwegsamem Gelände nach einem der Ansprüche 2 bis 6, wobei jede der Hauptrillen (3) einen Umfangsabschnitt (3C) umfasst, der zwischen dem ersten geneigten Element (3A) und dem zweiten geneigten Element (3B) angeordnet ist und der sich entlang der Reifenumfangsrichtung erstreckt.

13. Reifen (1) zur Fahrt auf unwegsamem Gelände nach Anspruch 12, wobei der Umfangsabschnitt (3C) eine Länge in der Reifenumfangsrichtung aufweist, die gleich oder kleiner als 20 % eines Zickzackzyklus der Hauptrille (3) ist.

14. Reifen (1) zur Fahrt auf unwegsamem Gelände nach Anspruch 12 oder 13, wobei eine Rillenbreite (W3) des Umfangsabschnitts (3C) größer ist als eine Rillenbreite des ersten geneigten Elements (3A) und eine Rillenbreite des zweiten geneigten Elements (3B).

## Revendications

1. Pneumatique (1, 100) pour circuler en terrain accidenté, le pneumatique (1, 100) comprenant une portion formant bande de roulement (2), dans lequel
la portion formant bande de roulement (2) inclut au moins trois rainures principales (3) s'étendant en continu d'une manière en zigzag dans une direction circonférentielle du pneumatique, et au moins deux portions en relief délimitées par les rainures principales (3),
les rainures principales (3) sont prévues de sorte que des phases de zigzag de celles-ci coïncident les unes avec les autres,
les portions en relief incluent une première portion en relief (11) et une seconde portion en relief (12) adjacentes l'une à l'autre via une des rainures principales (3),
la première portion en relief (11) est divisée en une pluralité de premiers blocs (31) par une pluralité de premières rainures inclinées (21) qui sont inclinées dans une première direction relativement à une direction axiale du pneumatique,
la seconde portion en relief (12) est divisée en une pluralité de seconds blocs (32) par une pluralité de secondes rainures inclinées (22) qui sont inclinées dans une seconde direction, qui est opposée à la première direction, relativement à la direction axiale du pneumatique, et
les premiers blocs (31) respectifs sont disposés de manière à chevaucher les seconds blocs (32) respectifs dans la direction circonférentielle du pneumatique, de sorte que chaque premier bloc (31) a une longueur de chevauchement (D) dans la direction circonférentielle du pneumatique avec le second bloc (32) correspondant,
**caractérisé en ce que**
chaque premier bloc (31) inclut un corps principal (40) qui est incliné dans la première direction relativement à la direction axiale du pneumatique, et une paire de portions d'extrémité (41) qui sont inclinées dans la seconde direction relativement à la direction axiale du pneumatique.

2. Pneumatique (1, 100) pour circuler en terrain accidenté selon la revendication 1, dans lequel
chacune des rainures principales (3) inclut un premier élément incliné (3A) qui est incliné dans la première direction, et un second élément incliné (3B) qui est incliné dans la seconde direction, et
la pluralité de premières rainures inclinées (21) assurent une communication entre les seconds éléments inclinés (3B) des rainures principales (3) adjacents les uns aux autres dans la direction axiale du pneumatique, et la pluralité de secondes rainures inclinées (22) assurent une communication entre les premiers éléments inclinés (3A) des rainures principales (3) adjacents les uns aux autres dans la direction axiale du pneumatique.

3. Pneumatique (1, 100) pour circuler en terrain accidenté selon la revendication 2, dans lequel les premières rainures inclinées (21) s'étendent parallèlement au premier élément incliné (3A).

4. Pneumatique (1, 100) pour circuler en terrain accidenté selon la revendication 2 ou 3, dans lequel les secondes rainures inclinées (22) s'étendent parallèlement au second élément incliné (3B).

5. Pneumatique (1, 100) pour circuler en terrain accidenté selon l'une quelconque des revendications 2 à 4, dans lequel les premières rainures inclinées (21) sont inclinées sous un angle de 30 à 60 degrés relativement à la direction axiale du pneumatique.

6. Pneumatique (1, 100) pour circuler en terrain accidenté selon l'une quelconque des revendications 2 à 5, dans lequel les secondes rainures inclinées (22) sont inclinées sous un angle de 30 à 60 degrés relativement à la direction axiale du pneumatique.

7. Pneumatique (1, 100) pour circuler en terrain accidenté selon l'une quelconque des revendications 1 à 6, dans lequel un angle de chaque première rainure inclinée (21) relativement à la direction axiale du pneumatique est égal à un angle de chaque seconde rainure inclinée (22) relativement à la direction axiale du pneumatique.

8. Pneumatique (1, 100) pour circuler en terrain accidenté selon l'une quelconque des revendications 1 à 7, dans lequel la première portion en relief (11) a uniquement les premières rainures inclinées (21) à titre de rainures qui traversent complètement la première portion en relief (11).

9. Pneumatique (1, 100) pour circuler en terrain accidenté selon l'une quelconque des revendications 1 à 8, dans lequel la seconde portion en relief (12) a uniquement les secondes rainures inclinées (22) à titre de rainures qui traversent complètement la seconde portion en relief (12).

10. Pneumatique (1, 100) pour circuler en terrain accidenté selon l'une quelconque des revendications 1 à 9, dans lequel une aire d'une surface de bande de roulement de chaque premier bloc (31) est de 95 à 105 % d'une aire d'une surface de bande de roulement de chaque second bloc (32).

11. Pneumatique (1, 100) pour circuler en terrain accidenté selon l'une quelconque des revendications 1 à 10, dans lequel chaque second bloc (32) inclut un corps principal (50) qui est incliné dans la seconde direction relativement à la direction axiale du pneumatique, et une paire de portions d'extrémité (51) qui sont inclinées dans la première direction relativement à la direction axiale du pneumatique.

12. Pneumatique (1) pour circuler en terrain accidenté selon l'une quelconque des revendications 2 à 6, dans lequel chacune des rainures principales (3) inclut une portion circonférentielle (3C) qui est située entre le premier élément incliné (3A) et le second élément incliné (3B) et qui s'étend le long de la direction circonférentielle du pneumatique.

13. Pneumatique (1) pour circuler en terrain accidenté selon la revendication 12, dans lequel la portion circonférentielle (3C) a une longueur dans la direction circonférentielle du pneumatique égale ou inférieure à 20 % d'un cycle de zigzag de la rainure principale (3).

14. Pneumatique (1) pour circuler en terrain accidenté selon la revendication 12 ou 13, dans lequel une largeur de rainure (W3) de la portion circonférentielle (3C) est plus grande qu'une largeur de rainure du premier élément incliné (3A) et qu'une largeur de rainure du second élément incliné (3B).
